# EUROPEAN PATENT APPLICATION

(11) **EP 2 594 130 A2**
(43) Date of publication of application: **22.05.2013**
(21) Application number: 12192831.1
(22) Date of filing: 15.11.2012
(51) Int. Cl.: A01K 27/00

(54) **Animal collar and retracting dog lead**

(30) Priority: 15.11.2011 GB 201119744; 23.12.2011 GB 201122411; 14.02.2012 GB 201202589; 01.10.2012 GB 201217572
(71) Applicant: Jermy, Michelle, Cambridge, Cambridgeshire PE27 5QS (GB)
(72) Inventor: Reed, Michael, Northamptonshire, NN9 5EJ (GB)
(74) Representative: Hedges, Martin Nicholas

(57) **Abstract**

An animal collar comprises a band member 1 having opposed first and second ends, with complementary connector buckles 2a, 2b provided on the opposed ends which are engageable to secure the ends together to form the band into a closed loop. An anchor ring 4 is secured to the band member 1 for engagement by a hook member 6 carried on a lead 8, and a hook member 5 is secured to the band member 1 in spaced apart relation to the anchor ring 4, the hook member 5 being securable to an anchor ring 7 carried on the lead 8 so as to securely connect the collar 1 to the lead 8.

## Description

The present invention relates to animal collars and more particularly to improvements in the security of animal collars, especially, dog collars.

Although used to carry identity information and the like, animal collars are used primarily for the purpose of enabling control of an animal by providing an attachment point on the animal for a lead. Typically, in addition to a buckle for fastening the ends of the collar together in order to securing it on the neck of the animal, a D-ring loop is usually provided on the collar to which a hook connector provided on the end of a lead can be attached for securing the lead to the collar.

This conventional design has the drawback, however, that it is reliant on the single connection point for securing the lead to the collar. This means that failure of any on part of the connection link between the animal and the lead will result in the animal being released from the handlers control. For example, the material of the collar which retains the D-ring in place could tear, the D-ring itself could fail, the hook connector on the lead could fail, the material which retains the hook on the lead could fail. Any one of these failures would result in the connection between the lead and the collar being compromised and the animal being released.

According to the present invention there is provided an animal collar comprising a band member having opposed first and second ends, complementary connector means provided on the opposed ends which are engageable to secure the ends together to form the band into a closed loop, an anchor ring secured to the band member for engagement by a hook member carried on a lead, and a hook member secured to the band member in spaced apart relation to the anchor ring, the hook member, in use, being securable to an anchor ring carried on a separate component so as to securely connect the collar to that separate component.

A collar in accordance with the invention has the advantage that, by providing both an anchor ring and a hook member on the collar, a more secure connection between the animal and a lead is achieved since it enables a redundancy to be set up in the connection between the lead and the collar. In this way, failure of a single component in the connection chain cannot result failure of the connection and hence they is significantly reduced risk of an animal unintentionally being freed from the lead.

Preferably, the anchor ring is spaced from the hook member such that the anchor ring is connectable to the hook member with the anchor ring extending along and adjacent the band member. This has the advantage that, when a lead is not connected to the collar, the hook member is secured to the collar in a manner which prevents it moving about which might cause damage or injury to the animal.

The anchor ring is preferably D-ring which is sown into the collar.

In one use configuration, both the hook member and the anchor ring are directly connected to a lead. In particular, the lead is provided with both a hook member which is attachable to the anchor ring of the collar, and an anchor ring to which the hook member of the collar is attachable, the anchor ring and hook member of the lead being spaced so as to enable simultaneous connection between both pair of connectors to be made.

In another configuration, the collar is used in parallel with a second collar, harness or the like, the hook member of the collar being connected to an anchor ring provided on the lead whilst the hook member of the lead is connected to an anchor ring on the second collara / harness. In this way, a standard lead is able to connect simultaneously to both collars and a redundancy is thereby provided in the load carrying path between the animal and the lead.

Another aspect of the present invention relates to improvements in retracting dog leads.

Dog leads are known in the art in which the lead web or cord is wound onto a reel within a lead housing and, the reel being urged rotationally into a wound position by a spring or the like, the lead being extendable against the action of the biasing spring to extend the lead and thereby allow a dog attached thereto a wider range of movement whilst still being under the control of the human owner. As the dog moves away from the owner, move cord will be unwound from the reel against the action of the biasing spring, and as the animal moves back towards the owner, the spring automatically winds up the excess cord, thereby preventing the cord from resting on the ground where it might become tangled or cause an obstruction to the animal or the human owner. Such prior art leads typically also include a stop mechanism by means of which the human owner can prevent further unwinding of cord from the reel in the event that they wish to limit the range of movement of the animal away from them, for example in the circumstance where another dog might have appeared and the owner wishes to prevent their animal from reaching the other animal. Another system which is known on the prior art also includes an additional feature whereby, once the stop mechanism has been operated, the lead will still extend and retract up to the length at which the stop mechanism was imposed. This offers the advantage that, even when the range has been limited, the lead will still rewind and hence prevents extra lead cord from gathering on the ground where it might become tangled or the like as the animal moves back towards the owner.

The problem, however, with the prior art systems is that when the lock is in its default position, it is disengaged allowing the lead to extend as the animal pulls on it. If the animal bolts, however, the lead cord will rapidly extend out of the housing and this can cause rope burn if, for example, the user has the cord passing through their hand or the cord is passed around another person or object.

According to another aspect of the present invention there is provided a retracing dog lead comprising a housing having a handle portion and an internal chamber in which a spool is rotatably mounted, an extraction opening in the housing aligned with a winding cylinder of the spool, rotational biasing means biasing the spool to rotate in a first direction into a first rotational position, the spool being rotatable in a second direction opposite said first direction against the action of the biasing means so as, in use, to unwind from the spool a lead material wound thereon, locking means moveably mounted in the housing for movement between a first position in which it engaged with the spool so as to allow rotation of the spool only in the first direction under the loading of the rotational biasing means whilst limiting rotation in the second direction and a second position in which it is disengaged from the spool so as to allow full rotation of the spool in both the first and second directions, and further comprising biasing means associated with the locking means which biases the locking means into said first position.

A retracting dog lead in accordance with this aspect of invention has the advantage that, in the default position, the spool is locked against rotation in a sense which will allow the cord to unwind from the spool, instead only allowing the spool to rotate to wind up any slack in the cord. In this way, the risk of the cord causing a burn to a user is eliminated as in the default position the cord is not free to extend rapid from the housing if the animal were to try to bolt.

Preferably, the rotational biasing means comprises a torsion spring which urges the spool to rotate in the first direction in order to wind up the cord which there is slack in it.

Furthermore, the rotational biasing means is preferably stronger than the biasing means associated with the locking means to sure that loading from the rotational biasing means is sufficient to cause the locking means to retract against the loading of its biasing means when the spindle is rotating in the first direction.

In a particularly preferred embodiment, the spool includes a plurality of saw tooth profiled locking teeth circumferentially distributed about the rotational axis of the spool, each tooth pointing radially outwardly of the spool, the steeper face of each tooth facing in the second direction and the ramped face of each tooth facing in the first direction, the locking means overlapping with said teeth in the locking position so as to lie in the path of rotational movement thereof. IN this way, when the spool rotates in the first direction, the ramped face of each tooth will engage the locking means, developing a camming action which will cause the locking means to retract against the loading of the biasing means acting thereon and thereby allowing the spool to rotate in the first direction in a ratchet manner. At the same time, rotation in the second direction is limited by the steep face of the teeth which will act as a stop for the locking means when it comes into engaged therewith, thereby limiting the rotational movement in the second direction to the tooth pitch of the teeth.

The locking means preferably takes the form of a trigger which is mounted in the handle portion of the housing. The biasing means then preferably comprises a spring, in particular a helical spring which engages between a part of the handle portion and the trigger so as to urge the trigger away from the handle and towards the spool, the trigger then being pressable into the handle against the biasing force of the spring in order to retract the locking means from the spool to allow free rotation thereof.

Preferably, the locking means includes teeth which engage with the spool to control movement thereof, the teeth, in one embodiment, being asymmetrical with a saw-tooth profile or the like to facilitate a camming action when the teeth are engaged on a first side to help urge the teeth away from the spool, whilst ensuring a positive engagement when abutted on the other side to ensure that the spool cannot rotate past the teeth in the other direction.

IN a particularly preferred embodiment, a latch is provided in the housing, in particular in the handle, which is operable to lock the locking means in either the first or the second positions. In one embodiment, the latch is slidably mounted in the handle and has a hook which is engageable either behind the locking means in order to lock it in the first position or in a recess in the locking means in order to lock it in the second position.

In an alternative embodiment, the latch is pivotally mounted in the handle and has a hook with is retractably engageable either in front of or behind a post provided on the locking means in order to lock the locking means in either an engaged or a disengaged position. The latch is preferably provided with detent means which operate to releasably secure the latch in its engaged and disengaged positions, the detent means preferably being a leaf spring or the like which engages in one of a pair of recesses in a housing in which the latch is pivotally mounted.

In a still further embodiment, the locking means, preferably in the form of a trigger, is moveable between three distinct positions - the first position allowing only rewinding of the spool, the second position allowing free rotation in both directions, and a third , fully engaged position in which the spool is locked against rotation in either direction. The locking means is then mounted in the housing for sliding movement between the three positions with resiliently deformable detent members being provided which permit movement between the three positions when sufficient force is applied to the trigger by a user which retaining the trigger in each position against accidental movement. The biasing means is then located between the housing and the trigger so as to be compressed when the trigger is in the second position - the detent members being sufficiently strong to prevent movement of the trigger from the second position to the first position under the force of the biasing member; and to urge the trigger forward so as to bring the teeth into engagement with the spool when in the first position - the trigger having a range of movement between detents to apply the trigger to retract against the force of the biasing means to permit rotation of the spool in one direction. In the third position, the trigger is locked fully forward by the detent arrangement with the teeth fully engaged with the socket so the biasing member performs no function in this position.

IN one embodiment, the spool is provided with at least one dog leg channel in a face which is proximate to a winding handle, the winding handle being pivotally moveable into a position in which it extends from the side of the assembly for effecting manual winding of the spool and having an end which engages in said dog leg channel in said extended position and moves into an undercut portion so as to secure said handle in the extended position. This has the advantage that the handle may be biased into a folded position, for example by means of a spring, whilst ensure that when it is selected for operation by the user, it stays in the extended position.

In another embodiment, the housing includes a drive plate which is moveable within the housing between an engaged position in which it is drivingly coupled to the spool and a disengaged position in which it is drivingly decoupled from the spool, biasing means being associated with the drive plate to urge it into the disengaged position, and an actuating button being provided on the driving plate which is engaged by the winding handle when it is in an operating position so as to press the button against the loading of the biasing means and hence move the drive plate into its engaged position so as to drivingly couple the winding handle to the spool.

Other developments and improvements will be apparent to the skilled reader from the following detailed description. Whilst the various features are described there in combination, it will be understood that individual elements may be utilized in isolation of each other in order to achieve the advantages associated therewith.

IN order that the invention may be well understood, there will now be described some embodiments thereof, given by way of example, reference being made to the accompanying drawings, in which:
Figure 1 is a perspective view from a first angle of a collar according to the invention in a first configuration;
Figure 2 is a perspective view from a second angle of the collar of Figure 1 in the first configuration;
Figure 3 is a perspective view from the second angle of the collar of Figure 1 in a second configuration;
Figure 4 is a perspective view from the first angle of the collar of Figure 1 in an open configuration;
Figure 5 is a perspective view of the collar of Figure 1 with a lead attached thereto in a secure fashion;
Figure 6 is an exploded view of a lead assembly according to the invention;
Figure 7 is a partially cut away side view of the lead assembly of Figure 6 locked in a first configuration;
Figure 8 is a cut away view of the lead assembly of Figure 6 unlocked in the first configuration;
Figure 9 is a cut away view of the lead assembly of Figure 6 unlocked in a second configuration;
Figure 10 is a cut away view of the lead assembly of Figure 6 locked in the first configuration;
Figure 11 is a cut away side view of the lead assembly of Figure 6 locked in the second configuration;
Figure 12 is an exploded view of a lead assembly according to a second embodiment of the invention;
Figure 13 is a sectional side view of the assembly of Figure 12 unlocked in a first configuration;
Figure 14 is sectional side view of the assembly of Figure 12 unlocked in a second configuration;
Figure 15 is sectional side view of the assembly of Figure 12 locked in the first configuration;
Figure 16 is sectional side view of the assembly of Figure 12 locked in the second configuration;
Figure 17 is a cut away view of the assembly of Figure 12;
Figure 18 is a perspective view of an assembly according to a third embodiment of the invention;
Figures 19 to 21 are sectional top views of the embodiment of Figure 18 in three difference operating positions; and
Figures 22a to 22d are sectional sides views of the embodiment of Figure 18 in different operating positions of the trigger.

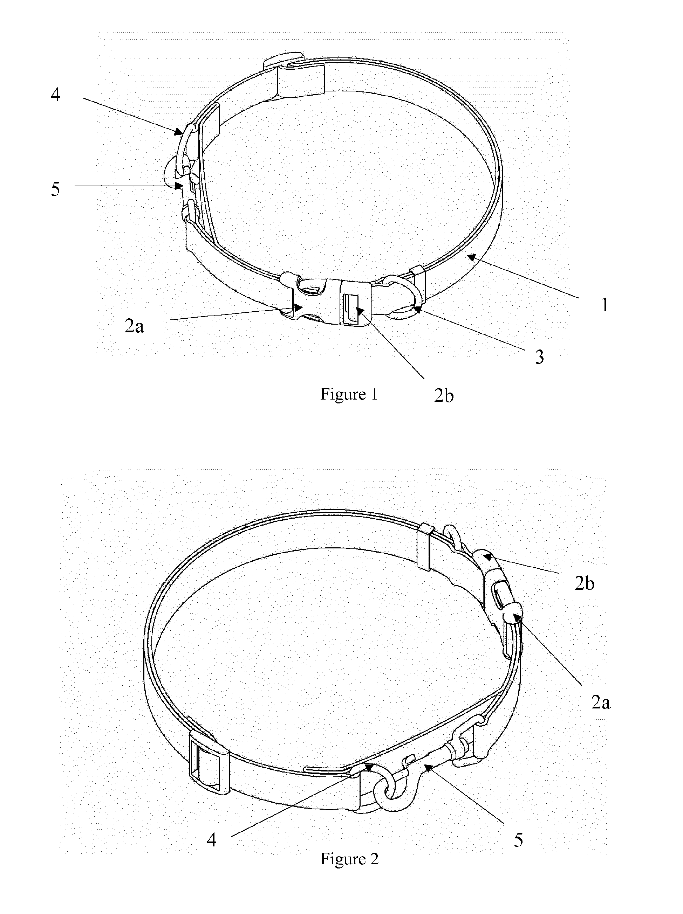

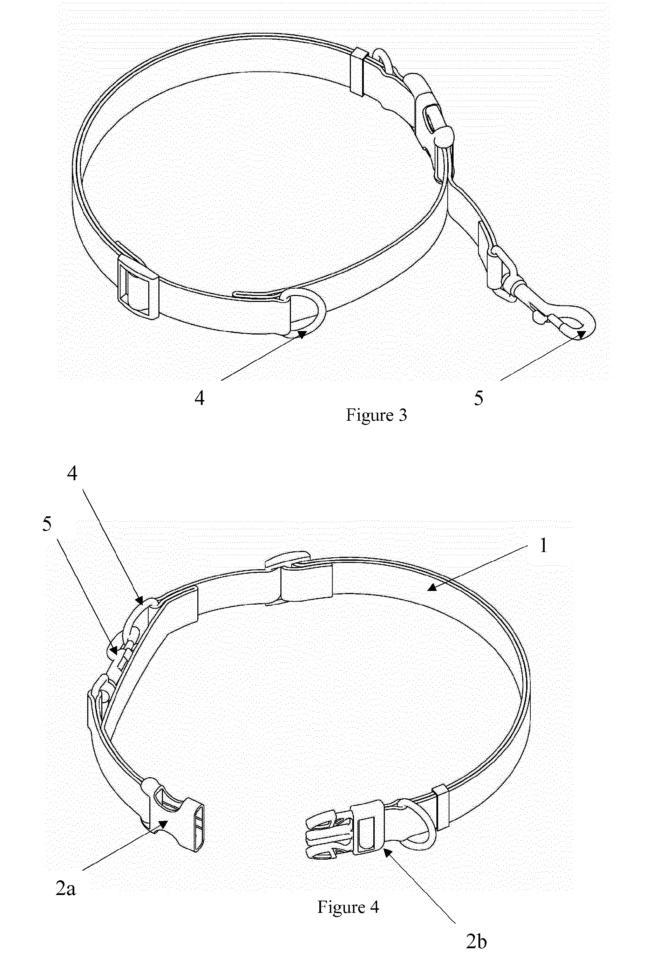

Referring first to Figure 1, there is shown a collar 1 according to the invention. The collar 1 has complementary buckle parts 2a, 2b formed on the opposing ends thereof which enable the ends of the collar 1 to be connected together to form a closed loop as shown in Figure 1, or separated as shown in Figure 4 to enable the collar to be fitted to or removed from an animal.

A first D-ring anchor 3 is secured to the collar in any conventional manner - in the illustrated example it is sown between overlapped sections of the collar material. A second D-ring anchor 4 is also secured to the collar 1, again in the illustrated example sown between overlapped sections of the collar material, the second-ring 4 being spaced around the collar 1 from the first D-ring 3.

Also secured to the collar 1 proximate but spaced apart from the second D-ring 4 is a hook anchor 5. IN the illustrated example the hook anchor 5 is a conventional sliding gate secure hook, but any other well known hook connector may also be used. The hook 5 is secured to the collar 1 in any conventional well known manner and is spaced from the second D-ring 4 such that the hook 5 may be latched onto the second D-ring 4 when not in use, as shown most clearly in Figure 2, with the hook 5 substantially taut so as to prevent the hook 5 from swinging freely and possibly causing damage or injury.

When it is desired to leash the animal, the hook 5 is dis-connected from the second D-ring as shown in Figure 3 and a hook connector 6 carried on the end of a leash is instead latched onto the second D-ring 4 to link the leash to the collar 1 in a conventional manner.

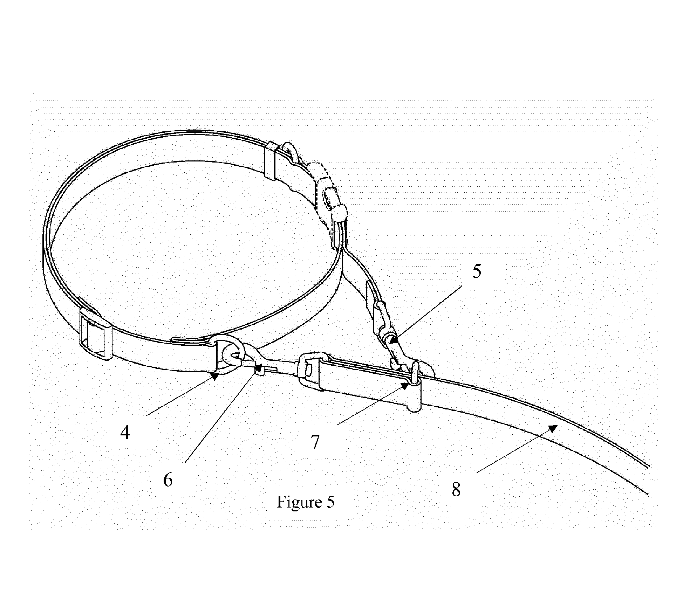

The hook 5 of the collar 1 is then latched onto a D-ring loop 7 which is carried proximate to the end of the least set back from the hook 6 as shown in Figure 5. In this way, a much more secure connection between the lead and the collar is achieved firstly because the load transmitted through the lead is shared between the D-ring 4 and the hook 5 of the collar 1, and secondly because if any one of the connecting elements (hooks or D-rings) fail, the connection between the lead 8 and the collar is maintained through the second link. In this way, the risk of unintentional release of the animal due to failure of the collar or the lead is diminished.

In an alternative use configuration, the hook 5 of the collar 1 may instead be used to secure the collar to a D-ring carried on a lead, which lead is also connected to a second collar, harness or the like by means of a hook provided on the lead being connected to a D-ring on the second collar / harness.

Whilst the collar invention has been illustrated with particular forms of securing hooks, buckles etc, it will be understood that the form of these elements are not critical to the invention and that other well known designs may equally be utilised.

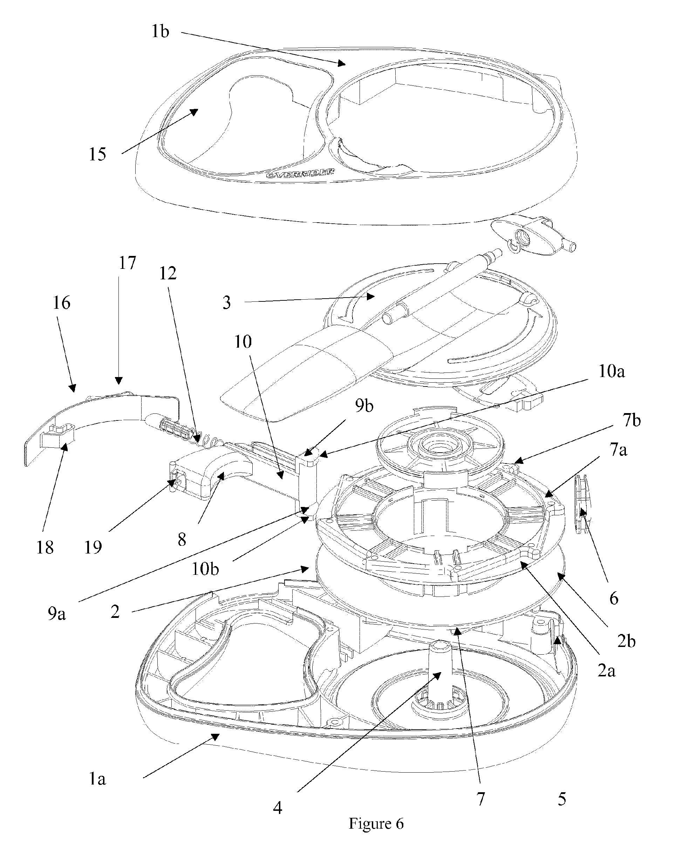

Referring now to Figure 6, there is shown an exploded view of a retracting dog lead according to a first embodiment of the invention. In Figure 6, the lead comprising a housing 1 split into two halves 1a, 1b in which is housed a winding spool 2 and a winding handle 3. The spool 2 is rotatably mounted in the housing 1 on an axle 4 which is integrally formed with one of the housing halves 1a. A torsional spring (not shown) is mounted in the housing and engages with the spool 2 in a well known fashion to rotationally bias the spool to rotate in a first winding direction relative to the housing 1 - anti-clockwise as drawn in Figure 6.

The housing 1 has an opening 5 formed in one end through which, in use, a lead cord or web, wound onto the spool 2, passes, the torsional spring biasing the spool to wind the cord onto the spool and thereby retract the lead into the housing. A bushing 6 is mounted in the aperture 5 in order to ensure smooth and free movement of the cord through the opening.5.

In order to control the rotation of the spool, a series of saw tooth profiled locking teeth 7 are formed on the opposing outer axial faces 2a, 2b of the spool, the teeth extend around each face 2a, 2b centered on the axle 4. Each tooth 7 has a ramped face 7a which faces in the first winding direction of the spool 2, and a steep face 7b which faces in the opposite, unwind direction (clockwise in Figure 6).

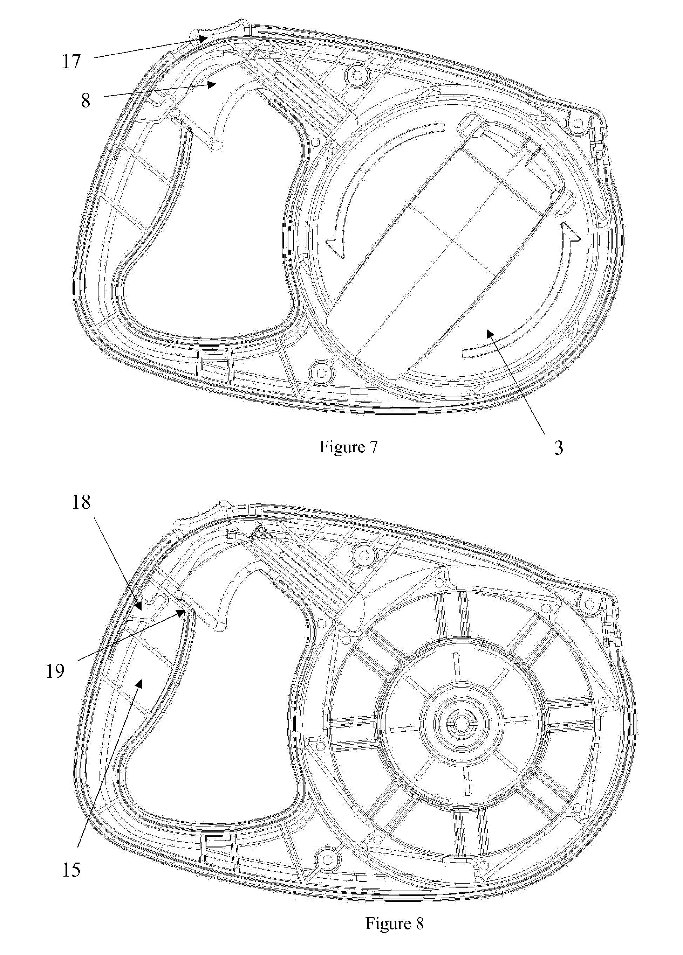

A locking trigger 8 is mounted in the housing 1 in the region of a handle portion 9 thereof. The trigger 8 has a pair of stops 9a, 9b formed on an arm 10 extending therefrom which are engageable with the locking teeth 7 formed on the spool 2. The trigger 8 is configured to be slidably moveable within the housing so as to move radially towards and away from the spool 2 between a first engaged position in which the stops 9a 9b extending into the path of the locking teeth 7 so as to interfere with the rotation of the spool 2 as illustrated in Figure 8 and a second, retracted position in which the stops 9a. 9b are withdrawn from the path of the locking teeth 7 so as to allow free rotation of the spool 2.

The stops 9a, 9b of the trigger 8 are shaped so as to have a curved face 10a and a steep face 10b. The curved face 10a faces towards and engages with the ramped face 7a of the locking teeth 7 in order to maximize the camming action achieved therebetween, whilst the steep face 10b faces towards and engages with the steep face 7b of the locking teeth 7 in order to minimize any camming action achieve between those two faces when engaged and hence avoid the possibility of the teeth rotating past the stop in a clockwise direction when the trigger is in the engaged position.

A coil spring 12 is engaged with the trigger so as to urge it into the engaged position, so that the lock is normally on. When the trigger is so engaged, rotational movement of the spool 2 in the clockwise direction as drawn in Figure 6 is limited to the tooth pitch of the locking teeth 7. As the spool rotates in the clockwise direction, the steep face 7b of the nearest "upstream" tooth engages with the steep face 10b of the stop, and further rotational movement of the spool in the clockwise direction is prevented. On the other hand, as the spool rotates in the anti-clockwise direction under the biasing of the torsional spring, the ramped face 7a engages with the curved face 10a of the stop and a camming action is developed. The spring force of the torsional spring is set to be higher than that of the coil spring 12 so that the resultant force of the camming action is sufficient to cause the trigger 8 to move radially outwardly against the force of the coil spring12 to the retracted position, allowing the spool to rotate in the anti-clockwise direction in a ratcheted manner, winding up any slack in the cord.

In order to release the spool to rotate in the clockwise direction and hence allow cord to unwind from the lead, the trigger 8 is pressed into the handle 9 by the operator using a finger. This moves the trigger against the force of the coil spring into the retracted position, withdrawing the stops from between the locking teeth 7 and thereby allowing the spool to rotate freely in either direction. In this configuration, an animal attached to the lead and run freely whilst the spool will still automatically wind up any slack which exists in the cord.

The assembly furthermore includes a locking clip 16 which is slidably mounted in the handle 15 and operable to engage with the trigger 8 to lock it in either the engaged or retracted positions. The locking clip 16 furthermore acts as an abutment for the trigger biasing spring 12 as shown, for example, in Figure 8. More particularly, the locking clip 16 has a button 17 which extends through an opening in the handle 15 so as to enable an operator to slide the clip back and forth between engaged and disengaged positions. The clip 16 furthermore has a hook 18 on an inner surface which is engageable in an opening 19 formed in the trigger 8.

In the retracted position of the locking clip 16 as best illustrated in Figure 8, the hook 18 is withdrawn from the path of movement of the trigger and hence the trigger is free to move between its engaged and retracted positions as described above.

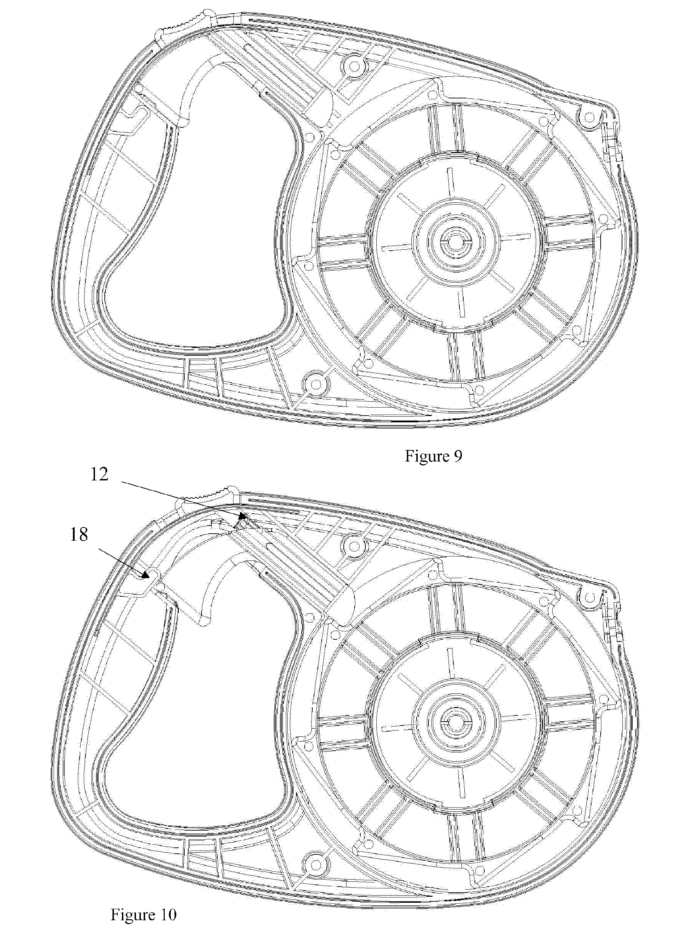

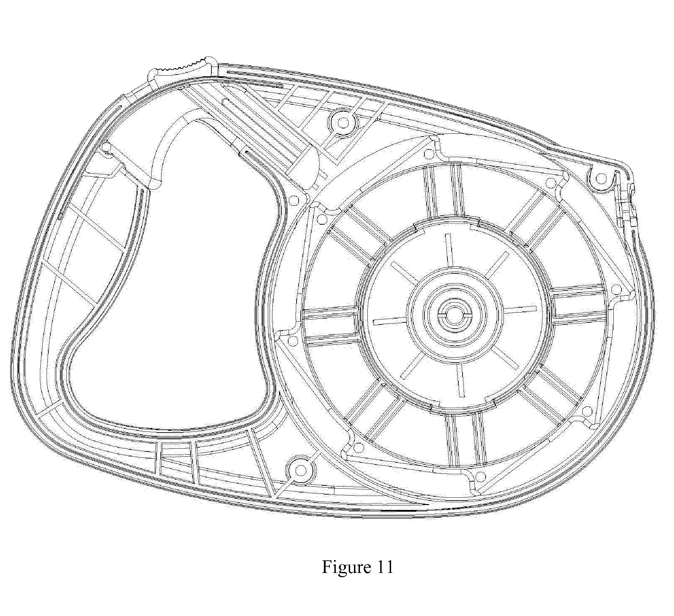

An operator may use his thumb to slip the button 17 forward, which causes the clip to move within the handle, bringing the hook 18 into the path of the trigger 8. This may be done when the trigger is either in its engaged or disengaged positions to achieve different effects as follows:
If the clip 16 is moved into its engaged position when the trigger is in its default engaged position, the hook 18 engages behind the trigger 8, as shown in Figure 10, locking it in the engaged position and preventing it from moving to the disengaged position. Since the trigger 8 can no longer retract against the loading of the biasing spring 12, the spool is locked against rotation in either direction in this configuration.
If the clip 16 is moved into its engaged position when the trigger is in its disengaged position as shown in figure 11, the hook 18 engages in the recess 19 in the trigger 8, retaining it in the disengaged position against the loading of the biasing spring 12. Since the stops 9a, 9b are withdrawn from the locking teeth 7 in this position, the spool 2 is able to freely rotate in either direction, allowing an animal to run freely within the length of the cord wound on the spool 2 whilst automatically winding up any slack.

The illustrations also show a winding handle which is operable to manually wind the cord onto the spool 2 is desired. The details of this handle and its mechanism are known in the art and will not be described here is any detail.

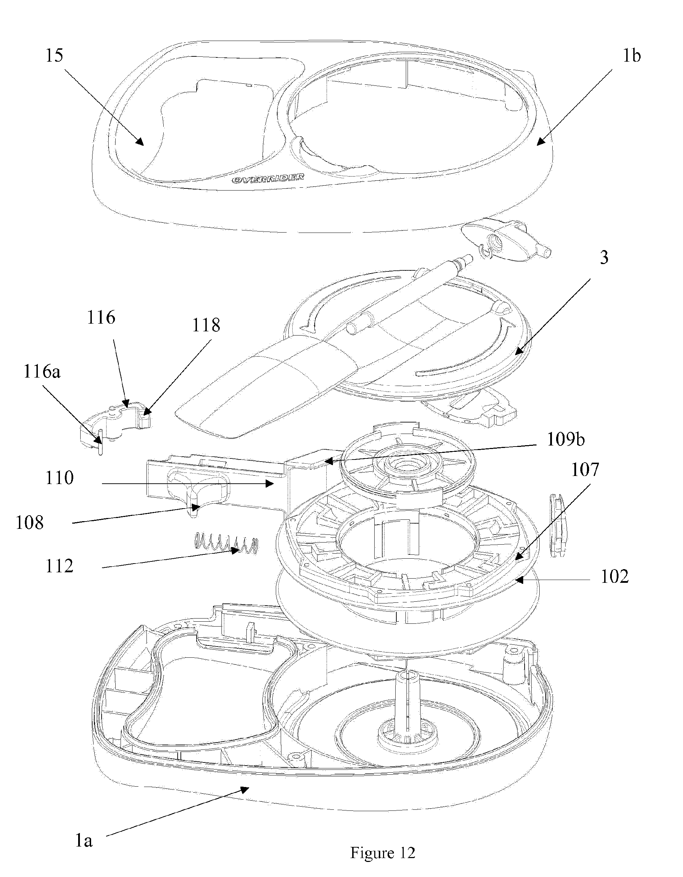

Referring now to Figures 12 to 17, there is shown a retracting dog lead according to a second embodiment of the invention, like features with the first embodiment of Figure 6 being identified by the same reference numeral. The general construction of the lead of Figure 12 is the same as that of the first embodiment, but it differs primarily with regard to the configuration of the locking trigger 108 and the associated locking clip 116.

As with the first embodiment, the locking trigger 108 of the second embodiment has a pair of stops 109a, 109b formed on an arm 110 extending from the trigger 108 that are engageable with locking teeth 107 formed on the spool 102. The trigger 108 is slidably moveable within the housing 1 of the assembly so as to move radially towards and away from the spool 102 between engaged and retracted positions in identical fashion to the first embodiment. Full details will not, therefore, be repeated here.

Coil spring 112 is associated with the trigger 108 and bears against the inside of the handle portion 15 of the housing 1 so as to bias the trigger 108 radially inwards towards the locking teeth 107 of the spool 102, and a locking clip 116 is provided in the handle portion 15 which cooperates with the trigger 108 to lock it in either the engaged or the retracted positions. In difference to the first embodiment, however, the locking clip 116 in the second embodiment is a rocker switch that is pivotally mounted in the handle 15 of the housing.

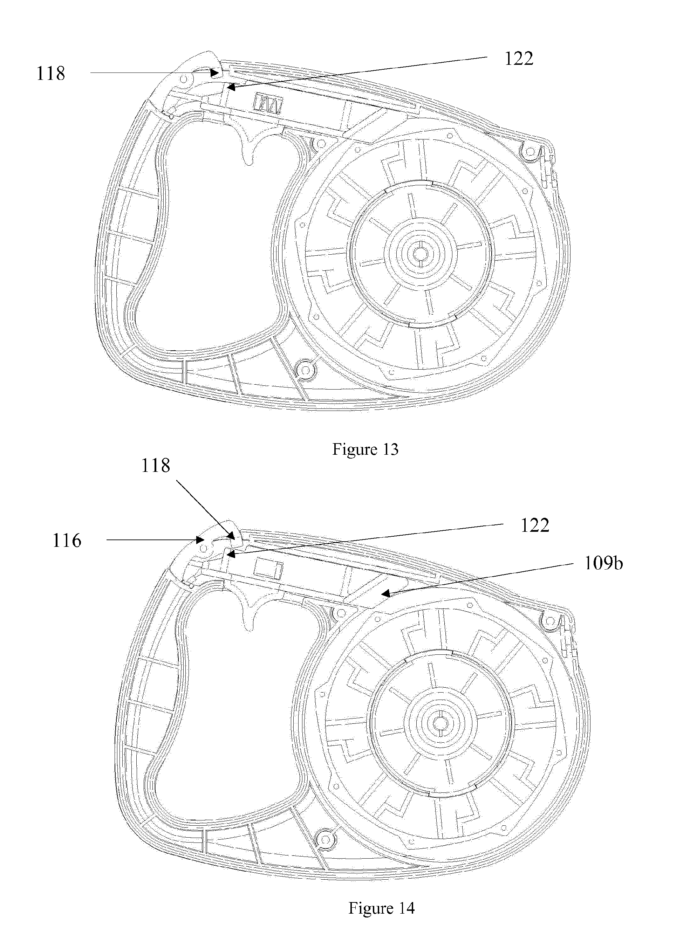

As best illustrated in Figure 12, the locking clip 116 has a hook 118 formed on one end which, upon pivoting movement of the clip 116, moves into and out of the sliding path of the trigger 108. AS can be seen in Figure 13, the trigger has a leg 122 formed on it with which the hook 118 of the clip 116 cooperates to allow or prevent movement of the trigger as follows:

When the clip 116 is pivoted back as shown in Figure 13 so that the hook 118 is raised out of the path of the leg 122 of the trigger 108, the trigger 108 is free is slide back and forth between its engaged and retracted positions, thereby permitting the lead cord to automatically rewind onto the spool but not unwind therefrom.. A user may furthermore, operate the trigger 108 to retract it against the biasing force of the coil spring 112, as shown in Figure 14, thereby allowing the lead cord also to freely unwind from the spool 102.

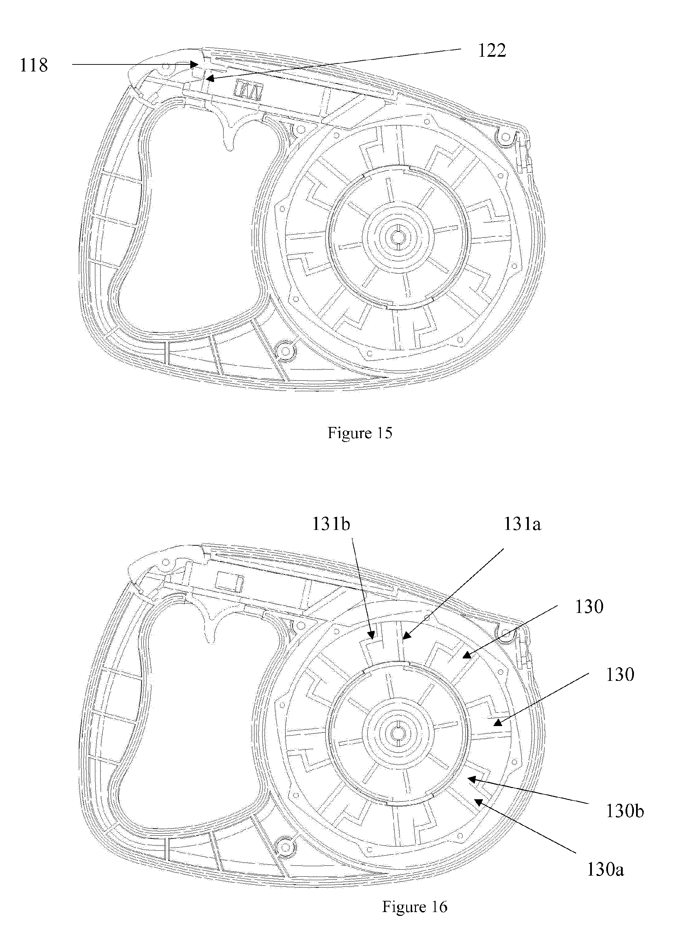

If the locking clip 116 is rotated forwards, the hook 118 is moved into the path of the leg 122 of the trigger 108 and thereby interferes with the sliding movement of the trigger 108 in the housing 1, locking it in either the extended or the retracted positions depending on the position of the trigger 108. As shown in Figure 15, if the clip 116 is pivoted forwards when the trigger 108 is in its default, engaged position, the hook 118 engages behind the leg 122 so as to block its movement away from the spool 102, thereby locking the trigger in the engaged position. The spool 102 is according locked against rotation in either direction.

If the clip 116 is instead pivoted forwards when the trigger 108 is in its retracted position as shown in Figure 16, the hook 118 engages in front of the leg 122, preventing the leg 122 from moving towards the spool 102 and thereby locking the trigger in its retracted position in which the stops 109a, 109b are retracted from the spool and the spool 102 is according free to rotate in either direction.

The clip 116 is also provided with a detent member 116a in the form of a leaf spring which has a ridge formed thereon which is engageable in one of a pair of complementary shaped channels 121a, 121b formed in the housing 1 so as to resiliently retain the clip in either its forward or back positions.

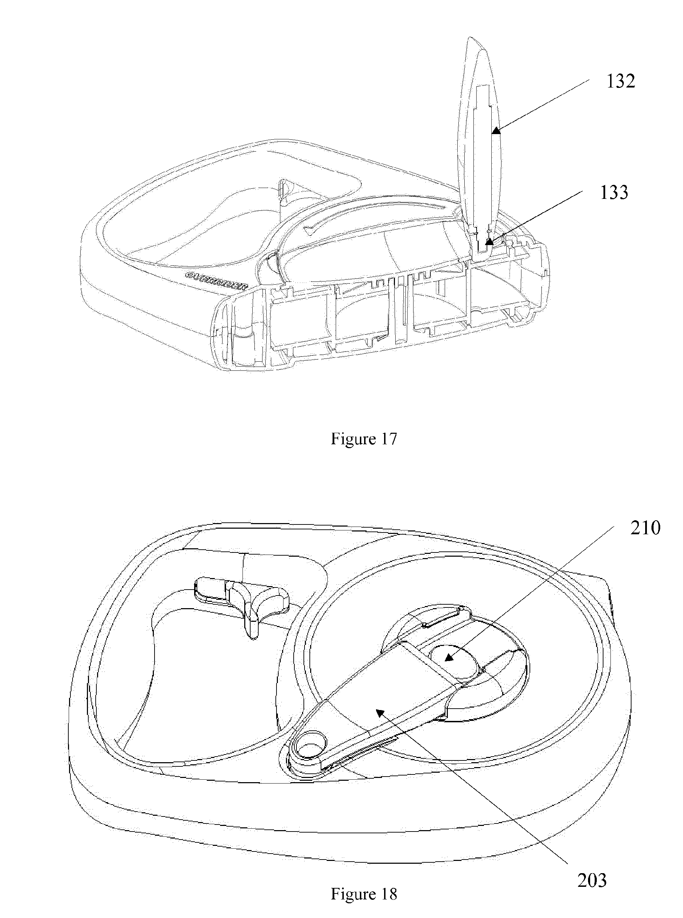

AS can also be clearly seen in Figure 16, the spool 102 of the second embodiment differs from that of the first embodiment by virtue of it having dog leg channels 130 formed in the side thereof which is proximate to the winding handle assembly 3, each channel 130 being formed by a pair of neighbouring ribs 131a, 131b upstanding from the side of the spool 102. When the winding handle 132 is pivoted into its winding position as shown in Figure 17, the actuating member 133 formed on the end thereof engaged in one of the channels 130 in order to rotationally lock the handle 132 to the spool 102. the actuating member 133 is narrow enough to slide along the narrower mouth portion 130a of the channel 130 and locates in the wider undercut portion 130b when the handle is fully extended. When winding is commenced, the handle 132 first of all rotates a small amount relative to the spool 102 as the actuator slides under the undercut of the channel and engages with the forward rib 131b. Engagement of the actuator 133 with the forward rib 131b then rotationally locks the handle to the spool 102 so that continued rotation of the handle rotates the spool to wind the cord thereon. At the same time, the handle is prevented from pivoting closed, for example under the loading of a biasing spring which biases the handle into its closed position.

In order to close the handle, it is first rotated backwards (clockwise in Figure 16, which moves the actuator 133 away from the forwards rib 131b, against the rear rib 131a and out of the undercut 130b of the channel. The handle 132 is then free to pivot into its closed position.

Finally, as can be seen in Figure 16, the profile of the stops 109a, 109b and the teeth 107 of the spool 102 are different in the second embodiment, the flank 107b of the teeth107 being more inclined so as to be substantially parallel to the abutting face of the stops 109a, 109b. The manner of the interaction is, however, the same as for the first embodiment.

Referring now to Figures 18 to 22d, there is shown a third embodiment of the invention which differs from the previous embodiments by virtue of the winder engagement mechanism and the winder locking mechanism and described in more detail below.

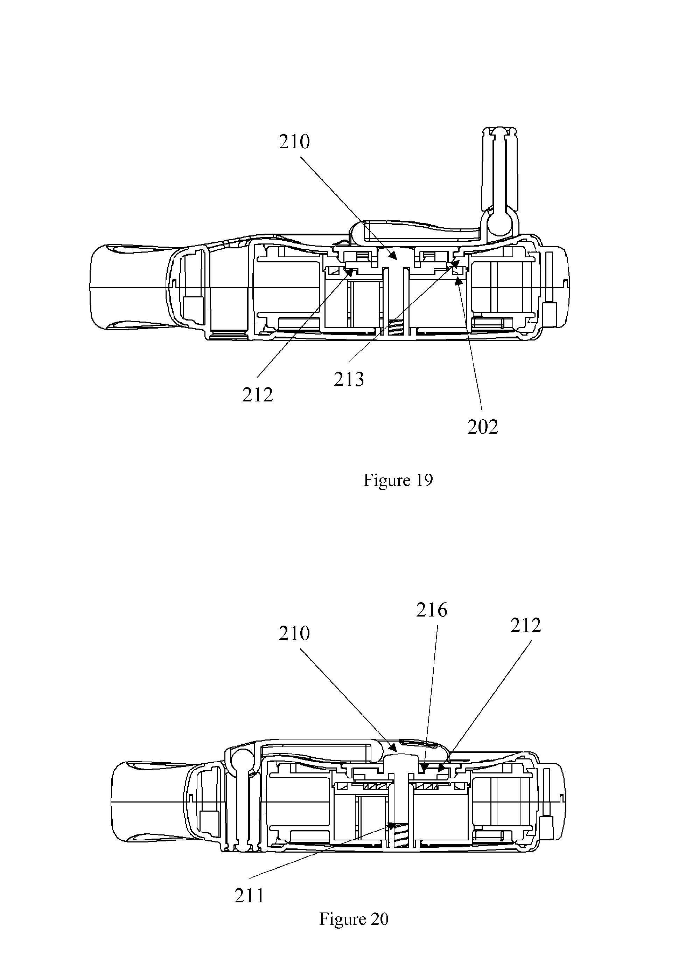

As with the previous embodiment, the winding handle 203 is pivotally moveable between a folded down, disengaged position as illustrated in Figure 18, and an erect, engaged position as shown in Figure 19. In difference to the previous embodiments, a drive button 210 is located in the centre of the housing 201, which button 210 is urged by spring 211 into an extended position in which it sits proud of the outer surface of the housing 201 (as shown in Figure 18) but which is engaged by the side face 203a of the handle 203 when it is folded into its engaged position so as to press it into the housing 201 against the force of the biasing spring 211 as illustrated in Figure 19.

The button 210 is part of a drive plate 212 which has drive teeth 213 formed about the outer periphery. The drive teeth 213 of the plate 212 are complementary to and aligned with drive teeth 216 formed on the spool 202. When the button 210 is pressed inwards against the force of the spring 211, the drive plate 212 moves axially with the button towards the spool 202 and the teeth 213 of the plate are brought into engagement with the teeth 216 on the spool, thereby drivingly coupling the drive plate 212 to the spool 202. In this way, when the handle 203 is rotated, the non-circular shape of the button ensures that the rotation of the handle 202 is transmitted to the button and thence to the drive plate 213 (note that although the button is illustrated as being oval which engagaes in a complementary oval opening in the handle plate, other shapes are possible such as a polygon, or some other drive linkage between the handle and drive plate 213 may be implemented which maintains the drive in both positions of the drive plate 213). In turn, the engagement between the drive plate 212 and the spool 202 means that the spool 202 is also rotated so as to enable the cord to be manually wound onto the spool 202.

On the other hand, when the handle is folded into its disengaged position, the spring 211 causes the drive plate 212 to move axially away from the spool 202 so as to disengage the teeth 216, 213 and hence drivingly isolates the handle from spool 202.

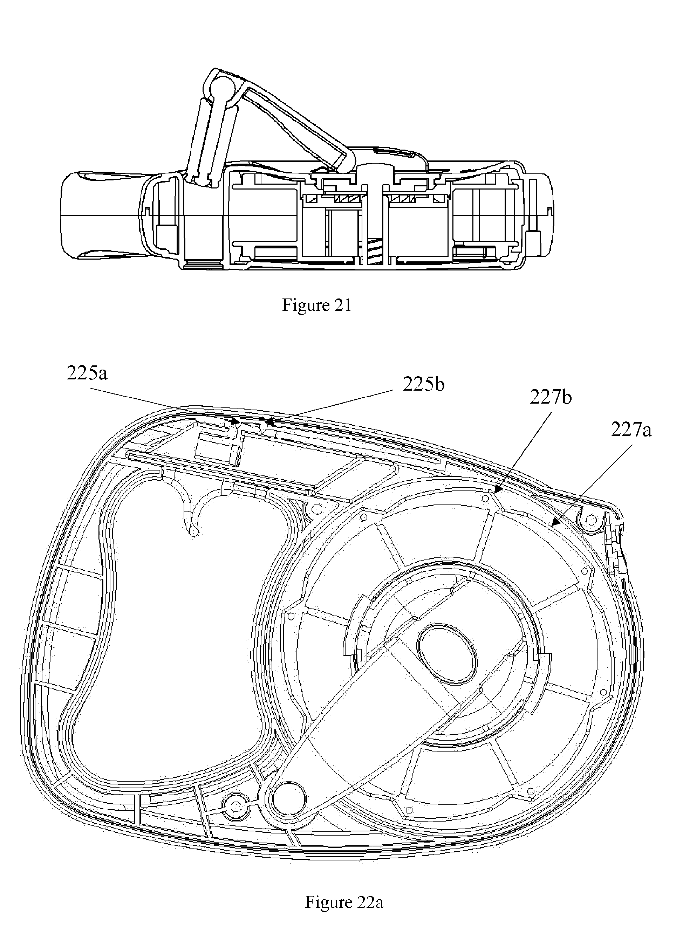

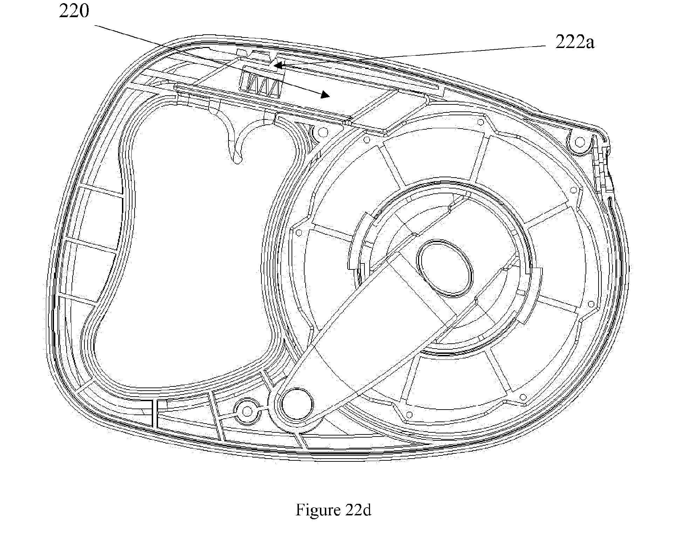

Looking now at Figures 22a to 22d, there is shown the detail of the alternative spool locking mechanism according to the third embodiment. AS with previous embodiments, the locking trigger 218 of the third embodiment has a pair of stops 219a, 219b formed on an arm 220 extending from the trigger 218 that are engageable with locking teeth 227 formed on the spool 202. The trigger 218 is slidingly moveable within the housing 201 of the assembly so as to move towards and away from the spool 202 between engaged and retracted positions.

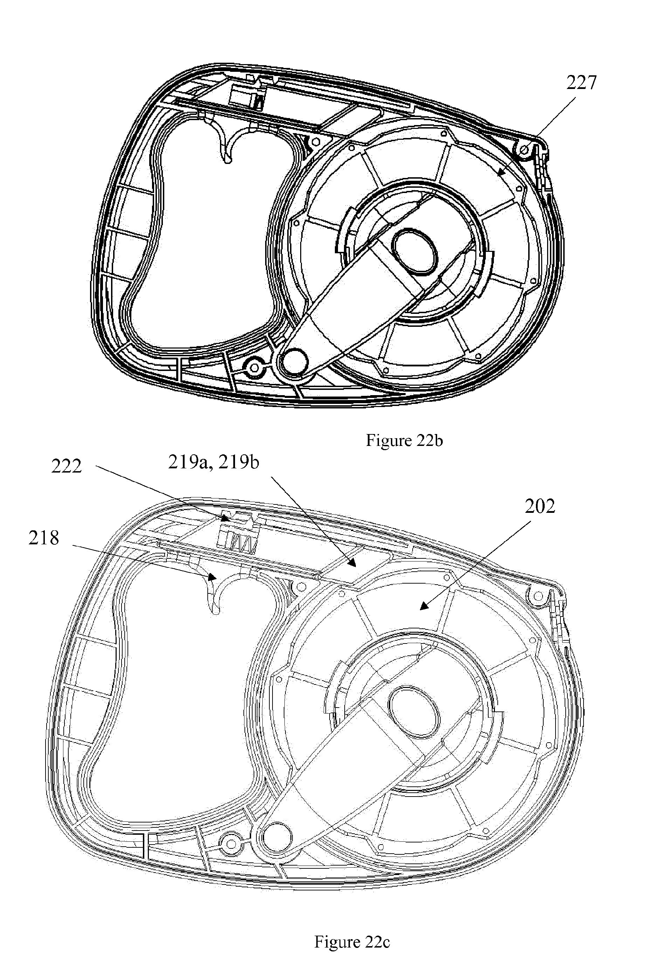

In difference to the previous embodiments, the arm 220 includes a detent member 222 in the form of a spring arm with a peg 222a formed on the end thereof, and a pair of similar pegs 225a, 225b are formed on the inside of the housing 201, spaced apart along the path of movement of the peg 222a as it travels with the trigger 218 when moved between engaged and retracted positions. The pegs 225a, 225b acts as stops for the peg 22a on the detent member 222 which divide the range of movement of the trigger 218 into three distinct operating regions - a first position shown in Figure 22a corresponding to a freewheel mode, a secod position shown in Figures 22b and 22c corresponding to a rewind mode, and a third position shown in Figure 22b corresponding to a locked position, as described in more detail below.

In order to move between each operating region, sufficient force is applied by the user to the trigger to enable the camming action developed between the spring arm peg 222a and the respective housing peg 225a, 225b to deflect the spring arm 222 inwardly and allow the spring arm peg 222a to move past the associated housing peg 225a, 225b in the required direction.

Figure 17a shows the trigger 218 in the freewheel position. In this position, the trigger 218 is withdrawn far enough away from the spool 202 so that the stops 219a, 219b are completely retracted from the locking teeth 227 of the spool and the spool 202 is therefore free to rotate about its central axis.

When the trigger 218 is pressed forward, the spring arm peg 222a moves past the first housing peg 225a so as to lie in the region between the first and second housing pegs 225a, 225b. By virtue of the axial spacing between the first and second housing pegs 225a, 225b, the trigger is moveable, in this second rewind mode position, to a limited extent, between the two positions shown in Figures 17b and 17c. As can be seen from these figures, in the forward position shown in Figure 17c, the stops 219a, 219b overlap with the locking teeth 227 of the spool so as to inhibit rotation of the spool 202, whereas in the rearward position shown in Figure 17b, the stops 219a, 219b are withdrawn from the locking teeth 227 to allow the spool 202 to rotate.

A spring 230 is mounted in the housing 201 and engages with the arm 220 so as to urgent it forwards into the position shown in Figure 17c and hence, in the rewind position, the trigger is biased forward so that the stops 219a, 219b overlap the locking teeth 227. Due to the saw tooth profile of the locking teeth 227 as discussed in relation to earlier embodiments, upon rotation of the spool 202 clockwise in the drawings, which corresponds with unwinding chord from the spool, the steep flank 227b of the proximate locking tooth 227 engages against the side of the stops 219a, 219b and further rotation in the clockwise direction is prevented. According, in this mode chord cannot be unwound from the spool 202.

On the other hand, when any tension in the chord is released so as to allow the spool to rotate under the force of its wind back spring the gentle ramping of the trailing flank 227a of the proximate locking tooth 227 develops a camming action with the stops 219a, 219b, allowing the arm 220 to be pushed away from the spool by virtue of the fact that the spring force of the arm spring 230 is less than that of the spool rewind spring, and hence allowing the spool 202 to rewind the chord in a ratchet fashion.

Finally, when the trigger is pushed further forward so that the spring arm peg 222a moves past the second housing peg 225b, the stops 219a, 219b are pushed into full engagement with the locking teeth 227 of the spool 202, thereby locking the spool 202 against rotation in either direction.

IN all other respects, the mechanism and operation of the third embodiment is the same as that of the previous embodiments and it will not, therefore, be described here in any further detail

## Claims

1. An animal collar comprising a band member having opposed first and second ends, complementary connector means provided on the opposed ends which are engageable to secure the ends together to form the band into a closed loop, an anchor ring secured to the band member for engagement by a hook member carried on a lead, and a hook member secured to the band member in spaced apart relation to the anchor ring, the hook member, in use, being securable to an anchor ring carried on a separate component so as to securely connect the collar to that separate component.

2. An animal collar according to claim 1, wherein the anchor ring is spaced from the hook member such that the anchor ring is connectable to the hook member with the anchor ring extending along and adjacent the band member.

3. An animal collar according to claim 1 or claim 2, wherein the anchor ring is D-ring.

4. An animal collar according to any of the preceding claims, wherein the anchor ring is sown into the collar.

5. An animal collar according to any of claims 1 to 4, wherein the anchor ring is carried on the connector means associated with one of the opposed ends of the band member.

6. An animal collar and lead assembly comprising an animal collar according to any of the preceding claims, and a lead having a hook member and an anchor ring, the hook member of the lead being attached to the anchor ring of the collar, and the anchor ring of the lead being attached to the hook member of the collar, the anchor ring and hook member of the lead being spaced so as to enable simultaneous connection between both pair of connectors to be made.

7. A retracing dog lead comprising a housing having a handle portion and an internal chamber in which a spool is rotatably mounted, an extraction opening in the housing aligned with a winding cylinder of the spool, rotational biasing means biasing the spool to rotate in a first direction into a first rotational position, the spool being rotatable in a second direction opposite said first direction against the action of the biasing means so as, in use, to unwind from the spool a lead material wound thereon, locking means moveably mounted in the housing for movement between a first position in which it engaged with the spool so as to allow rotation of the spool only in the first direction under the loading of the rotational biasing means whilst limiting rotation in the second direction and a second position in which it is disengaged from the spool so as to allow full rotation of the spool in both the first and second directions, and further comprising biasing means associated with the locking means which biases the locking means into said first position.

8. A retracting dog lead according to claim 7, wherein the rotational biasing means comprises a torsion spring which urges the spool to rotate in the first direction in order to wind up the cord which there is slack in it.

9. A retracting dog lead according to claim 7 or claim 8, wherein the rotational biasing means is stronger than the biasing means associated with the locking means to sure that loading from the rotational biasing means is sufficient to cause the locking means to retract against the loading of its biasing means when the spindle is rotating in the first direction.

10. A retracting dog lead according to any of claims 7 to 9, wherein the spool includes a plurality of saw tooth profiled locking teeth circumferentially distributed about the rotational axis of the spool, each tooth pointing radially outwardly of the spool, the steeper face of each tooth facing in the second direction and the ramped face of each tooth facing in the first direction, the locking means overlapping with said teeth in the locking position so as to lie in the path of rotational movement thereof.

11. A retracting dog lead according to any of claims 7 to 10, wherein the locking means takes the form of a trigger which is mounted in the handle portion of the housing, the biasing means comprising a spring, which engages between a part of the handle portion and the trigger so as to urge the trigger away from the handle and towards the spool, the trigger then being pressable into the handle against the biasing force of the spring in order to retract the locking means from the spool to allow free rotation thereof.

12. A retracting dog lead according to any of calims 7 to 11, wherein the locking means includes teeth which engage with the spool to control movement thereof.

13. A retracting dog lead according to any of claims 7 to 12, wherein the locking means is slidably moveable within the handle between three distinct positions - the first position allowing only rewinding of the spool, the second position allowing free rotation in both directions, and a third , fully engaged position in which the spool is locked against rotation in either direction, resiliently deformable detent members being associated with the locking means which permit movement between the three positions when sufficient force is applied to the trigger by a user which retaining the trigger in each position against accidental movement.

14. A retracting dog lead according to any of claims 7 to 13, wherein the housing includes a drive plate which is moveable within the housing between an engaged position in which it is drivingly coupled to the spool and a disengaged position in which it is drivingly decoupled from the spool, biasing means being associated with the drive plate to urge it into the disengaged position, and an actuating button being provided on the driving plate which is engaged by the winding handle when it is in an operating position so as to press the button against the loading of the biasing means and hence move the drive plate into its engaged position so as to drivingly couple the winding handle to the spool.
